# DEMANDE DE BREVET EUROPEEN

(11) **EP 1 477 294 A1**
(43) Date de publication de la demande: **17.11.2004**
(21) Numéro de dépôt: 04291186.7
(22) Date de dépôt: 07.05.2004
(51) Int. Cl.: B29C 65/16, B29C 63/16

(54) **Système de fixation d'un élément sur un support par soudure laser**

(30) Priorité: 13.05.2003 FR 0305736
(71) Demandeur: Centre d'Etude et de Recherche pour l'Automobile ( CERA), 51100 Reims (FR)
(72) Inventeur: Noirot, Daniel, 02350 Liesse Notre Dame (FR); Loiseau, Philippe, 51100 Reims (FR)
(74) Mandataire: Geismar, Thierry

(57) **Abrégé**

L'invention concerne un système pour fixer par soudure au laser un élément (1) sur un support (2), ledit élément et/ou ledit support étant en matière transparente au laser, ledit système comprenant :
- un bâti (4) pourvu d'une surface d'appui (4a) sur laquelle le support (2) et l'élément (1) sont destinés à être superposés ;
- un dispositif de placage réciproque de l'élément (1) et du support (2) sur la surface d'appui (4a) ;
- au moins une source (9i) de génération d'un faisceau laser (6i) ;
ledit système comprend en outre un ensemble de fibres optiques (8i) destinées à assurer chacune le cheminement d'un faisceau (6i).

L'invention concerne également un procédé mettant en oeuvre un tel système.

## Description

L'invention concerne un système pour fixer un élément tel qu'un revêtement ou un composant rigide sur un support ainsi qu'un procédé de fixation mettant en oeuvre un tel système.

L'invention vise notamment l'application du procédé à l'habillage par un revêtement décoratif, ou de protection, de composants de garnissage de véhicules automobiles, tels que des garnitures intérieures de portières, des accoudoirs de sièges ou des tableaux de bord. Ledit procédé peut être aussi utilisé pour fixer un composant rigide, tel qu'un médaillon ou un module de rangement sur un support tel qu'une garniture de porte ou une tablette arrière automobile.

Diverses techniques ont été proposées pour coller un élément à un support, entre autres au moyen d'une soudure au laser.

Il est notamment connu de réaliser la soudure d'un élément sur un support en prévoyant que l'élément ou le support soit transparent au faisceau laser. Le faisceau laser est disposé en vis à vis du composant transparent de façon à pouvoir le traverser jusqu'à l'interface élément/support. L'impact du faisceau sur cette interface assure ainsi la soudure.

Dans certains cas, par exemple lorsque l'élément est formé d'un revêtement textile, il est nécessaire de garantir un bon placage de l'élément sur le support. Une réalisation propose d'utiliser un moyen de placage rigide. Une autre réalisation prévoit l'utilisation d'une pellicule souple, appliquée par dépression sur l'élément ou le support.

Dans ces réalisations, le moyen de placage peut être transparent au faisceau laser. Ainsi, le faisceau est disposé de sorte à traverser successivement le moyen de placage puis le composant transparent, ceci de manière à réaliser la soudure.

Il est possible de réaliser la soudure de l'élément sur le support soit par le biais de plusieurs faisceaux laser séparés émis simultanément vers plusieurs points, soit par un faisceau unique qui se déplace par balayage pour réaliser la soudure en plusieurs points ou suivant une ou plusieurs lignes de soudure. Cette deuxième solution suppose la mise en place de moyens de robotisation coûteux nécessaires au pilotage de la trajectoire du faisceau.

La soudure entre le support et le revêtement est réalisée par fusion partielle, au niveau de l'interface élément/support, soit du support, soit du revêtement, soit d'une pellicule fusible intermédiaire disposée entre le support et le revêtement.

Dans la mesure où la source laser est à distance du point de soudure, il est nécessaire de prévoir une optique de focalisation apte à focaliser le (ou les) faisceau(x) laser sur le (ou les) point(s) de soudure. L'utilisation d'une telle optique de précision induit un montage plus complexe du système de soudure et des réglages précis de la focalisation des faisceaux vers les points de soudure.

Le but de la présente invention est de proposer un système qui permette d'effectuer, au moyen d'un faisceau laser, la soudure d'un élément sur un support, en garantissant une parfaite fiabilité de la soudure, et en s'affranchissant d'une robotisation et d'une optique de focalisation coûteuses et complexes.

A cet effet et selon un premier aspect, l'invention concerne un système pour fixer par soudure au laser un élément sur un support, ledit élément et/ou ledit support étant en matière transparente au laser, ledit système comprenant :
- un bâti pourvu d'une surface d'appui sur laquelle le support et l'élément sont destinés à être superposés ;
- un dispositif de placage réciproque de l'élément et du support sur la surface d'appui ;
- au moins une source de génération d'un faisceau laser.
Ledit système comprend en outre un ensemble de fibres optiques destinées à assurer chacune le cheminement d'un faisceau, chaque fibre ayant une extrémité amont connectée à la source correspondante et une extrémité aval connectée au bâti au voisinage de la surface d'appui, de sorte à pouvoir générer un flux de faisceau à l'interface entre le support et l'élément lorsqu'ils sont plaqués sur ladite surface.

Selon un deuxième aspect, l'invention concerne un procédé de fixation d'un élément sur un support utilisant un système tel que décrit ci-dessus, dans lequel successivement :
- le support et l'élément sont superposés sur la surface d'appui avec l'élément, réciproquement le support, contre ladite surface lorsque celui-ci est transparent au laser;
- le dispositif de placage est activé ;
- les sources sont allumées de sorte à assurer un collage laser au niveau des interfaces entre l'élément et le support qui sont disposées en regard des extrémités aval des fibres.

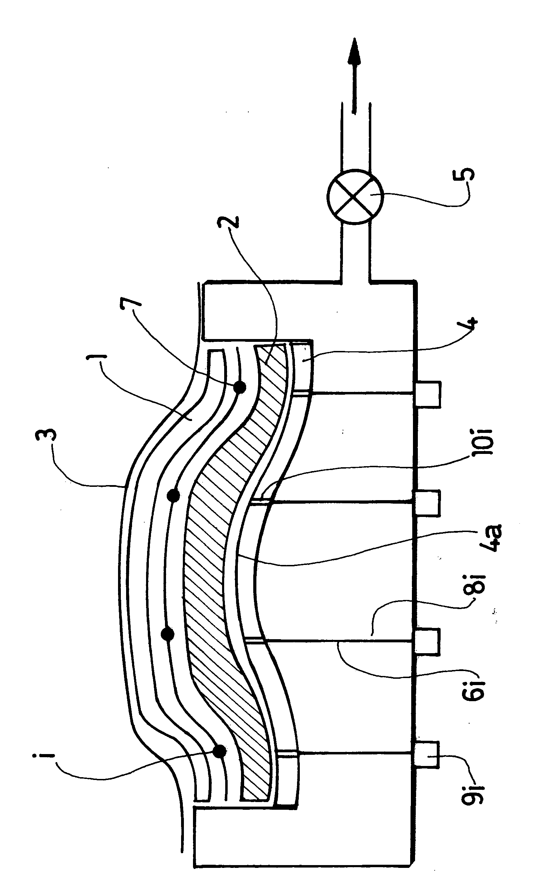

D'autres particularités et avantages de l'invention apparaîtront dans la description qui suit, faite en référence à la figure unique qui est une représentation schématique en coupe d'un mode de réalisation d'un système pour fixer un revêtement sur un support.

En référence à la figure, on décrit à présent un système permettant de fixer un élément 1, formé d'un revêtement, sur un support 2. Dans une réalisation, ledit système comprend un bâti 4 pourvu d'une surface d'appui 4a dont la forme est adaptée à celle du support 2. Le revêtement 1 est placé au dessus dudit support. Par ailleurs, un dispositif de placage réciproque du revêtement 1 et du support 2 sur la surface d'appui 4a est prévu.

On peut prévoir n faisceaux laser afin de réaliser une soudure en n points de l'interface élément/support. A cet effet, des faisceaux laser 6i (i variant de 1 à n), issus respectivement de sources laser 9i, sont acheminés par un ensemble de n fibres optiques 8i connectées chacune, au niveau de leur extrémité amont, à une desdites sources. Une source 9i de génération d'un faisceau laser peut être par exemple du type diode laser semi-conducteur ou Neodymium : Yttrium Aluminium Garnet (Nd : YAG).

En outre, chaque fibre 8i est connectée, au niveau de son extrémité aval, au bâti 4, au voisinage de la surface d'appui 4a de manière à permettre de générer un impact du faisceau 6i en un point i situé à l'interface entre le revêtement 1 et le support 2 et en regard de la connexion de la fibre 8i au bâti 4. A cet effet, le bâti 4 peut être pourvu d'orifices 10i débouchant dans la surface d'appui 4a et agencés pour permettre la connexion des extrémités aval des fibres 8i.

Afin de les protéger des détériorations, les fibres 8i peuvent être pourvues, au niveau de leur connexion avec le bâti 4, d'un élément de protection en matériau transparent au laser tel qu'un cache formé de verre à base de silice ou de matériau plastique tel qu'un PMMA.

Du fait de leur connexion au bâti 4, les fibres 8i permettent d'acheminer les faisceaux 6i à proximité des points de soudure i. De ce fait, il n'est pas nécessaire de prévoir de guider les faisceaux laser en sortie de fibre et les optiques de focalisation peuvent être supprimées.

Les faisceaux 6i peuvent être de puissance similaire. Dans une variante, ils peuvent présenter une puissance différente, d'un faisceau 6i à l'autre, en fonction des caractéristiques de soudure attendues. En particulier, il peut être prévu que la puissance de chaque faisceau 6i soit agencée en fonction de la surface du point de soudure i correspondant, ladite surface dépendant notamment de la focalisation dudit faisceau, de manière à ce que la puissance reçue par unité de surface, ou densité de puissance, soit similaire d'un point i à un autre.

Le support 2, du fait de sa transparence au laser, laisse passer les faisceaux 6i dont l'impact se produit au point i, et ce sans échauffement dudit support, afin de réaliser la soudure entre le revêtement 1 et le support 2.

Selon la réalisation représentée sur la figure, une pellicule thermoplastique 7 est interposée entre le revêtement 1 et le support 2. Cette pellicule est fusible sous l'impact d'un faisceau laser 6i issu d'une fibre 8i, de manière à permettre une soudure ponctuelle en i du revêtement 1 et du support 2 par fusion de ladite pellicule.

Selon une autre réalisation, le support 2 ou l'élément 1 est agencé pour fondre partiellement sous l'impact d'un faisceau laser 6i, de sorte à assurer le collage par fusion.

Typiquement, le caractère fusible est obtenu par incorporation de pigments minéraux, tels que du noir de carbone, dans la matière plastique destinée à fondre sous l'impact du faisceau laser, ladite matière plastique étant incorporée dans la pellicule 7.

Le dispositif de placage réciproque du revêtement 1 et du support 2 sur la surface d'appui 4a comprend un film thermoplastique 3 étanche à l'air et des moyens aptes à plaquer par dépression le film 3 sur revêtement 1 et/ou sur le support 2. Ces moyens comprennent par exemple une pompe à vide 5.

Le film 3 peut être disposé temporairement sur la face endroit du revêtement 1, c'est à dire celle ne faisant pas face au support 2, pendant la durée de réalisation de la soudure. Ledit film est alors retiré de la pièce une fois finie.

Le support 2 est disposé sur la surface d'appui 4a, le revêtement 1 étant lui même disposé sur le support 2. L'irradiation par les faisceaux 6i se fait alors par le dessous de la surface 4a. Un tel agencement rend le revêtement visible par l'opérateur, ce qui lui permet de déceler aisément un mauvais positionnement éventuel dudit revêtement et d'y remédier. L'utilisation d'un film 3 transparent à la lumière permet d'assurer ce contrôle.

Comparativement aux technologies basées sur un balayage, l'invention permet de réaliser l'opération de soudure en un temps très court. En outre, il n'est pas utilisé de robots coûteux destinés au pilotage dudit balayage.

Contrairement aux solutions à balayage, qui requièrent un faisceau laser suffisamment puissant (par exemple de 50 à 250 W) pour permettre une vitesse de balayage importante et donc un temps de soudure minimisé, l'invention permet d'utiliser des faisceaux 6i de très faible puissance (par exemple 1 W) pendant un temps très faible en regard du temps de fabrication global.

En variantes non représentées, l'invention permet de fixer un composant rigide, tel qu'un vide poche préalablement mis en appui par tout moyen connu, sur un support. Dans une telle réalisation, la matière fusible sous l'action du laser peut être pourvue de bossages situés en regard des points de soudure. Sous l'action des faisceaux laser, lesdits bossages fondent de manière à assurer la soudure du composant rigide sur le support. Lesdits bossages présentent en outre l'avantage de permettre un bon contact entre le composant rigide et le support sur chaque point de soudure.

La partie du bâti 4 formant la surface d'appui 4a peut être transparente au faisceau laser 6i, on peut alors disposer l'extrémité aval des fibres 8i en regard de cette partie. On peut également prévoir de réaliser le bâti entier en un matériau transparent au laser, ce qui permet d'éviter d'avoir à perforer celui-ci. Dans ce cas, on peut prévoir des douilles de connexion des fibres sur une paroi du bâti.

A titre d'exemples, le support 2 peut comprendre du polypropylène ou du polyéthylène et le revêtement 1 peut être formé de textile, cuir, moquette ou d'une peau d'aspect en matière plastique.

Selon une autre réalisation, le film 3 est formé de la pellicule 7 préalablement assemblée sur la face d'envers du revêtement 1, c'est à dire celle faisant face au support 2, et n'est pas destiné à être retiré de la pièce une fois finie. Ledit film joue alors à la fois un rôle de moyen de placage et de moyen de cohésion entre le support 2 et le revêtement 1, ceci après sa fusion sous l'impact d'un faisceau laser 6i.

L'élément 1 peut être transparent au laser. Il est alors disposé sur la surface d'appui 4a et le support 2 est disposé au dessus dudit élément et plaqué sur ce dernier par le dispositif de placage. Une telle réalisation permet au faisceau laser 6i de traverser l'élément 1 jusqu'à son point d'impact où se fait la soudure.

Les différentes étapes du procédé de fixation de l'élément 1 sur un support 2, utilisant un système de fixation par soudure tel que décrit ci-dessus, sont les suivantes :
- le support 2 et l'élément 1 sont superposés sur la surface d'appui 4a avec l'élément 1, réciproquement le support 2, contre ladite surface lorsque celui-ci est transparent au laser ;
- le dispositif de placage est activé ;
- les sources 9i sont allumées de sorte à assurer un collage laser au niveau des interfaces entre l'élément 1 et le support 2 qui sont disposées en regard des extrémités aval des fibres 8i.

L'intensité des faisceaux 6i peut être agencée pour assurer un flux de faisceau 6i sensiblement identique en tout point de soudure.

L'invention permet de recouvrir par un revêtement 1 une zone réduite du support 2. Cela permet par exemple de réaliser un médaillon décoratif d'aspect textile sur un panneau.

Dans un exemple particulier de réalisation, il est utilisé un support transparent au laser, non pourvu d'adjuvants, en polypropylène de 3 mm d'épaisseur. Pour un faisceau de 1W de puissance, acheminé par une fibre optique de 1 mm de diamètre non pourvue d'une optique de focalisation disposée à 1 mm du support, la densité de puissance reçue au point de soudure est de 0,52 W/mm². Un temps d'irradiation de 1 s suffit à réaliser la soudure, ce qui est très inférieur aux temps de soudure nécessaires dans les technologies à balayage.

## Revendications

1. Système pour fixer par soudure au laser un élément (1) sur un support (2), ledit élément et/ou ledit support étant en matière transparente au laser, ledit système comprenant :
- un bâti (4) pourvu d'une surface d'appui (4a) sur laquelle le support (2) et l'élément (1) sont destinés à être superposés ;
- un dispositif de placage réciproque de l'élément (1) et du support (2) sur la surface d'appui (4a) ;
- au moins une source (9i) de génération d'un faisceau laser (6i) ;
ledit système étant **caractérisé en ce qu'**il comprend en outre un ensemble de fibres optiques (8i) destinées à assurer chacune le cheminement d'un faisceau (6i), chaque fibre (8i) ayant une extrémité amont connectée à la source correspondante (9i) et une extrémité aval connectée au bâti (4) au voisinage de la surface d'appui (4a), de sorte à pouvoir générer un flux de faisceau (6i) à l'interface entre le support (2) et l'élément (3) lorsqu'ils sont plaqués sur ladite surface.

2. Système selon la revendication 1, **caractérisé en ce que** le bâti (4) présente des orifices (10i) débouchant dans la surface d'appui (4a), l'extrémité aval d'une fibre (8i) étant disposée dans chacun desdits orifices.

3. Système selon la revendication 2, **caractérisé en ce que** les extrémités aval des fibres optiques sont pourvues, d'un élément de protection en matériau transparent au laser au niveau de leur connexion aux orifices (10i).

4. Système selon la revendication 1, **caractérisé en ce qu'**au moins la partie du bâti (4) formant la surface d'appui (4a) est transparente au laser, l'extrémité aval des fibres (8i) étant disposées en regard de ladite partie.

5. Système selon l'une quelconque des revendications 1 à 4, **caractérisé en ce que** le dispositif de placage comprend un film thermoplastique (3) et des moyens aptes à plaquer par dépression ledit film sur le revêtement (1) et/ou sur le support (2).

6. Procédé de fixation d'un élément (1) sur un support (2) utilisant un système selon l'une quelconque des revendications 1 à 5, dans lequel successivement :
- le support (2) et l'élément (1) sont superposés sur la surface d'appui (4a) avec l'élément (1), réciproquement le support (2), contre ladite surface lorsque celui-ci est transparent au laser;
- le dispositif de placage est activé ;
- les sources (9i) sont allumées de sorte à assurer un collage laser au niveau des interfaces entre l'élément (1) et le support (2) qui sont disposées en regard des extrémités aval des fibres (8i).

7. Procédé selon la revendication 6, dans lequel l'intensité des faisceaux (6i) est agencée pour assurer un flux de faisceau (6i) sensiblement identique en tout point de soudure.

8. Procédé selon la revendication 6 ou 7, dans lequel le support (2) ou l'élément (1) est agencé pour fondre partiellement sous l'impact d'un faisceau laser (6i), de sorte à assurer le collage par fusion.

9. Procédé selon la revendication 6 ou 7, dans lequel une pellicule (7) thermoplastique, pouvant fondre sous l'impact d'un faisceau laser (6i), est disposée entre le support (2) et l'élément (1) lors de la superposition, de sorte à assurer le collage par fusion de ladite pellicule.

10. Procédé selon la revendication 9, dans lequel la pellicule (7) est associée au support (2) ou à l'élément (1) préalablement à la réalisation de la superposition, l'activation du dispositif de placage comprenant le placage par dépression de la pellicule (7) contre la surface d'appui (4a).
